Europäisches Patentamt

**European Patent Office**

**Office européen des brevets**

(11) Numéro de publication: **0 070 236**
**B1**

(12) **FASCICULE DE BREVET EUROPEEN**

(45) Date de publication du fascicule du brevet: **23.01.85**

(21) Numéro de dépôt: **82401285.0**

(22) Date de dépôt: **07.07.82**

(51) Int. Cl.⁴: **H 04 B 3/23**

(54) Dispositif de compensation de phase d'écho et son application aux annuleurs d'écho.

(30) Priorité: **09.07.81 FR 8113498**

(43) Date de publication de la demande:
**19.01.83 Bulletin 83/3**

(45) Mention de la délivrance du brevet:
**23.01.85 Bulletin 85/4**

(84) Etats contractants désignés:
**BE CH DE GB IT LI NL SE**

(56) Documents cités:
**US - A - 4 072 830**

**IEEE Transactions on Communications, Vol. COM-25,
No. 7, July 1977, pages 654 to 664**

(73) Titulaire: **SOCIETE ANONYME DE
TELECOMMUNICATIONS, 40 avenue de New York,
F-75116 Paris (FR)**

(72) Inventeur: **Colin de Verdiere, Jean-Marc Marie, 18, rue
Coriolis, F-75012 Paris (FR)**
Inventeur: **Langlois, Patrice René, 46, boulevard de
Créteil, F-94100 Saint Maur Val de Marne (FR)**
Inventeur: **Macchi, Odile Marie, 4, rue du Général
Duchesne, F-91400 Orsay, Essonne (FR)**

(74) Mandataire: **Bloch, Robert et al, 39 avenue de Friedland,
F-75008 Paris (FR)**

BUNDESDRUCKEREI BERLIN

## Description

La présente invention se rapporte à la transmission de données bidirectionnelles simultanées sur circuit 2 fils, et plus particulièrement à la technique d'annulation d'écho.

Il est connu qu'une technique permettant la transmission bidirectionnelle simultanée de données sur ligne deux fils, par exemple au moyen de modems (modulateurs-démodulateurs) est celle »d'anulation d'écho«. Lorsque les modems de chacune des deux extrémités émettent dans la même bande de fréquence, pour recueillir en réception le signal utile, il faut annuler les échos. Pour cela les dispositifs annuleurs d'écho fournissent une estimation des échos et la soustraient du signal reçu.

Ces échos se composent habituellement d'un écho local dû à la désadaption du circuit différentiel assurant le passage 4 fils — 2 fils auquel se superposent des échos distants dus à des réflexions du signal transmis en raison de désadaptions d'impédances. Ces derniers échos sont ainsi, en réception, affectés de dérive de fréquence c'est-à-dire que la fréquence porteuse de l'écho distant n'est plus la même que celle du signal émis.

Ainsi lorsque le signal émis est modulé par une fréquence porteuse $f_c$, l'écho arrive quant à lui modulé par la même porteuse $f_c$ affectée d'un déphasage

$$\varphi_n \text{ où } \varphi_n = 2\,\pi\,\Delta\,\mathrm{fnT} + \varphi_{0'}\,\Delta\mathrm{f}$$

étant la dérive de fréquence de l'écho, T la période d'échantillonnage. Pour annuler un tel écho, il faut le reconstituer en le modulant par la même porteuse $f_c$, avec à l'instant nT une phase $\theta_n$ qui est une estimation de la phase $\varphi_n$ de cet écho. Puis il faut en réception, à chaque instant d'échantillonnage nT, retrancher du signal reçu, le signal d'écho estimé.

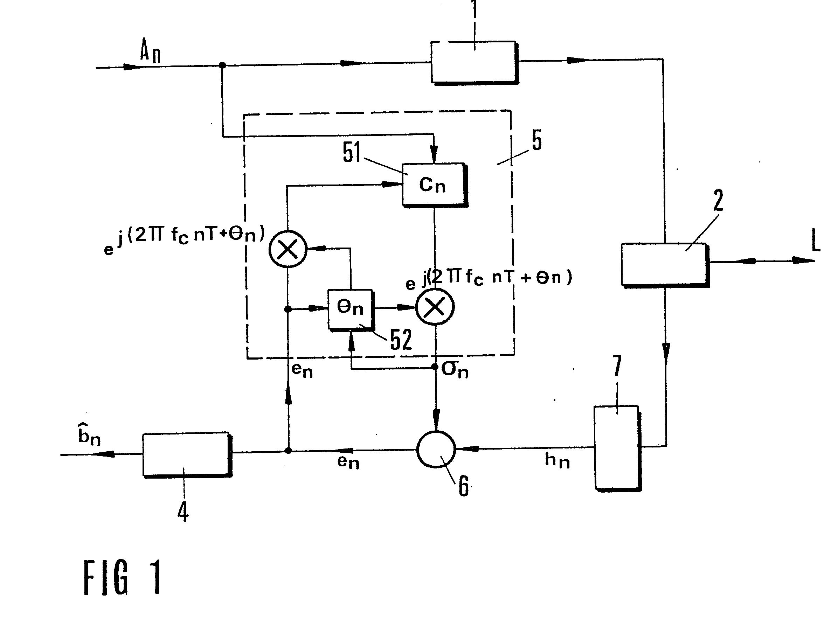

La figure 1 illustre un tel annuleur d'écho connu de l'art antérieur. A l'émission, le signal se présente comme une suite $A_n$ de données complexes qui sont modulées au moyen d'un modulateur 1 par la porteuse $f_c$. Un circuit différentiel 2 assure le couplage de la ligne avec l'émission et la réception du modem. Le signal reçu $h_n$ à l'instant nT se compose du signal utile venant de l'extrémité distante et d'un signal $g_n$ d'écho qui s'écrit :

$$g_n = \sum_k A_{n-k}\,r_k\,e^{j\,(2\,\pi\,f_c\,nT + \varphi_n)} \quad \text{avec} \quad \varphi_n = 2\,\pi\,\Delta\,\mathrm{f}\,nT + \varphi_0 \qquad [1]$$

et où $r_k$ est la réponse impulsionnelle échantillonnée ramenée en bande de base du signal d'écho.

En réception avant démodulation, au moyen du démodulateur 4, on retranche de chaque échantillon $h_n$ reçu un échantillon $\sigma_n$ de correction pour fournir un échantillon $e_n$ grâce au circuit de soustraction 6, $e_n$ et $\sigma_n$ étant complexes. On notera que le signal $h_n$ est un signal complexe déphasé de $\frac{\pi}{2}$ au moyen d'un circuit séparateur 7 inséré en réception entre le circuit différentiel 2 et le circuit 6 de soustraction.

Ensuite cet échantillon $e_n$ est appliqué à l'entrée du démodulateur 4. Les annuleurs 5 d'écho connus, permettant de compenser la phase $\theta_n$ de l'écho, sont formés d'un premier système 51 de réactualisation des coefficients $C_k$; par exemple conformément à l'algorithme du gradient

$$C_k^{n+1} = C_k^n + \gamma\,e_n\,A_{n-k}^+\,e^{-j\,(2\,\pi\,f_c\,nT + \theta_n)} \qquad [2]$$

où les coefficients $C_k$ sont complexes, où $\gamma$ est une constante positive, réelle et d'un second système 52 de réactualisation de la phase $\theta_n$ de l'écho, ladite phase $\theta_n$ étant également réactualisée selon l'algorithme du gradient

$$\theta_{n+1} = \theta_n + \alpha\mathrm{Im}\,(e_n\sigma_{n}{}^*) \qquad [3]$$

où $\sigma_n$ est l'écho reconstitué et $\sigma_n{}^*$ son complexe conjugué et $\alpha$ est une constante positive réelle.

En sortie de l'annuleur 5, l'écho reconstitué sécrit

$$\sigma_n = \sum_k C_k\,A_{n-k}\,e^{j\,(2\,\pi\,f_c\,nT + \theta_n)} \qquad [5]$$

Un tel annuleur d'écho a été décrit, par exemple dans un article paru dans IEEE Transactions on Communications, Vol. COM-25, n° 7, Juillet 77, pages 654 à 666.

De tels systèmes de réactualisation de la phase sont acceptables pour compenser une variation lente de phase ou une très faible dérive de fréquence. Toutefois lorsque la variation de phase comporte une dérive de fréquence importante, de tels systèmes sont très insuffisants. En particulier lorsque le rapport signal utile sur écho, l'écho étant affecté de dérive, est faible, la compensation de phase n'est plus acceptable. En effet elle nécessiterait d'adopter, dans l'algorithme [3] de réactualisation de la phase, un coefficient $\alpha$ trop grand, ce qui dégraderait les performances en l'absence de dérive de fréquence.

Les inventeurs de la présente invention ont cherché à pallier ces inconvénients des dispositifs de réactualisation de la phase pour annuleur d'écho afin de permettre de corriger une dérive de fréquence importante de l'écho.

L'invention consiste essentiellement à disposer un premier système de variation de phase pour les fluctuations lentes $u_n$ de phase et un second système de variation de phase pour les fluctuations rapides $w_n$ de phase, la variation $\theta_n$ totale de phase étant obtenue à la sortie d'un circuit d'addition, ledit circuit d'addition recevant les signaux $u_n$ et $W_n$ desdits premier et second systèmes.

Selon une première caractéristique, à chaque instant $nT$ d'échatillonnage, à partir d'une grandeur $dw_n$, la grandeur $dw_n$ représentant la partie imaginaire du produit de la correction $\sigma_n{}^*$ d'écho complexe conjugué par le signal $e_n$ de données obtenu à la sortie de l'annuleur d'écho, après suppression dudit écho, ledit produit étant multiplié par un coefficient $\alpha$ de proportionnalité, le système de compensation de phase selon l'invention, comporte des moyens pour additionner, à chaque instant d'échantillonnage, la variation $u_n$ lente de phase avec la variation $w_n$ rapide de phase, lesdits moyens d'addition fournissant en sortie la phase $\theta_n$ propre de l'écho, ladite variation lente $u_n$ étant obtenue à partir dudit accroissement $dw_n$ par des premiers moyens, ladite variation rapide étant obtenue à partir dudit accroissement $dw_n$ par des seconds moyens.

De plus, lesdites premiers moyens fournissant $u_n$ en sortie comportent des moyens pour additionner les fluctuations $u_{n-1}$, de l'instant d'échantillonnage précédent, avec la grandeur $T \cdot F_n$, $T$ étant égal à la période d'echantillonnage, ladite grandeur $F_n$ étant obtenue par des moyens d'addition de la grandeur $F_{n-1}$, de l'instant d'échantillonnage précédent, avec une grandeur $dF_n$, ladite grandeur $dF_n$ étant obtenue par des moyens d'addition dudit accroissement $dw_n$, pondéré par une constante $\dfrac{\beta\,\delta}{T}$, avec la grandeur $dF_{n-1}$ de l'instant d'échantillonnage précédent, ladite grandeur $dF_{n-1}$ étant également pondérée par une autre constante $(1-\delta)$, $\beta$ et $\delta$ étant des constantes positives reélles.

Selon une réalisation préférée de l'invention, la constante égale 1.

Selon une autre caractéristique de l'invention lesdits seconds moyens fournissant les fluctuations rapides $w_n$ comportent des moyens pour additionner ledit accroissement $dw_n$ avec la grandeur $w_{n-1}$ de l'instant d'échantillonnage précédent.

L'invention permet de corriger aisément des échos affectés d'une importante dérive de fréquence.

D'autres avantages et caractéristiques apparaîtront à la lecture de la description suivante illustrée par des dessins.

La figure 1 est une représentation générale connue d'un annuleur d'écho.

La figure 2 représente un système connu de réactualisation de la phase d'un annuleur d'écho.

La figure 3 représente une décomposition selon l'invention des fluctuations de phase de l'écho.

La figure 4 représente les boucles de correction de phase selon l'invention.

La figure 5 est une réalisation préférée de l'invention de la figure 4.

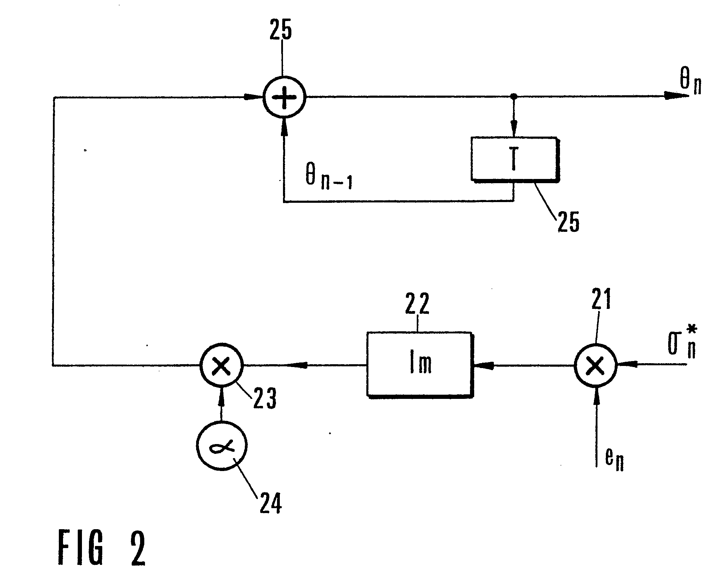

En se référant à la figure 2 les systèmes connus de réactualisation de la phase $\theta_n$ d'un annuleur d'écho comprennent un circuit 21 de multiplication de la valeur $\sigma_n{}^*$ complexe conjuguée estimée reconstituée pour l'échantillon précédent par la valeur $e_n$ fournie par le circuit 6 de soustraction de la figure 1. Le circuit 22 recevant le résultat de la multiplication du circuit 21 fournit en sortie la partie imaginaire pure de cette grandeur qui est ensuite multipliée par $\alpha$ au moyen du circuit 23 de multiplication. $\alpha$ est une constante choisie de façon appropriée, extraite d'une mémoire 24.

La grandeur fournie à la sortie du circuit 23 est additionnée par un circuit 25 d'addition avec la valeur $\theta_{n-1}$ fournie à la sortie d'un circuit 26 retardant d'une période $T$ d'échantillonnage. Le résultat obtenu à la sortie du circuit 25 d'addition est $\theta_n$, valeur du déphasage de l'écho pour chaque instant $nT$ d'échantillonnage selon une estimation connue du premier ordre. Cette estimation s'exprime encore par la relation $\theta_n = \theta_{n-1} + d\theta_n$.

L'invention consists à décomposer la phase $\theta_n$ en deux composantes $u_n$ et $w_n$, l'une $u_n$ correspondant à un phénomène lent de dérive susceptible de décroître ou bien de croître, l'autre $w_n$ correspondant à un phénomème rapide, et à extraire du phénomène rapide à chaque instant d'échantillonnage les résidus de phénomène lent. La phase $\theta_n$, à l'instant $nT$, s'écrit alors comme la somme des composantes $u_n$ et $w_n$.

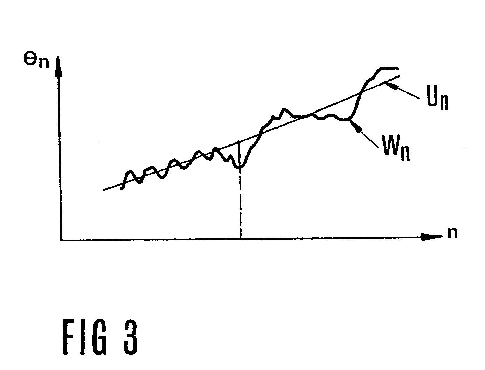

En se référant à la figure 3 la compensation $u_n$ représente une valeur moyenne de la phase tandis que $w_n$ représente des variations de faible amplitude autour de cette valeur moyenne de dérive. .

On dispose selon l'invention deux systèmes différents de réactualisation de chacune de ces deux composantes.

La composante $w_n$ est réactualisée selon l'invention au moyen d'une boucle de phase du premier ordre tandis que la composante $u_n$ est réactualisée selon l'invention au moyen d'une boucle de phase d'un ordre supérieur.

On forme tout d'absord l'accroissement $dw_n$ à partir de $\sigma_n{}^*$ l'écho reconstitué complexe conjugué et de $e_n$ la valeur complexe du signal utile après soustraction de l'écho. A cet effet un circuit 31 de multiplication recevant $e_n$ et $\sigma_n{}^*$ fournit une grandeur à l'entrée d'un circuit 32 qui ne laisse passer que la partie imaginaire en sortie. Cette grandeur est multipliée par $\alpha$ au moyen d'un circuit 33 de multiplication fournissant en sortie $dw_n$ l'accroissement de la composante rapide. La constante $\alpha$ est extraite d'une mémoire 34.

$dw_n$ s'écrit:

$$dw_n = \alpha \, \text{Im} \, (e_n \sigma_n{}^*) \tag{6}$$

On extrait selon l'invention de cette grandeur $dw_n$ les résidus de phénomène lent $u_n$ · A cet effet on applique $dw_n$ à l'entrée d'un premier système de réactualisation réalisant plusieurs traitement du signal $dw_n$ s'écrivant mathématiquement:

$$dF_n = (1 - \delta) \, dF_{n-1} + \frac{\delta \beta}{T} \, dw_n$$

$$F_n = F_{n-1} + dF_n$$

$$u_n = u_{n-1} + T \cdot F_n$$

où $\delta$ et $\beta$ sont des constantes choisies de façon appropriée et T est égal à la période d'échantillonnage.

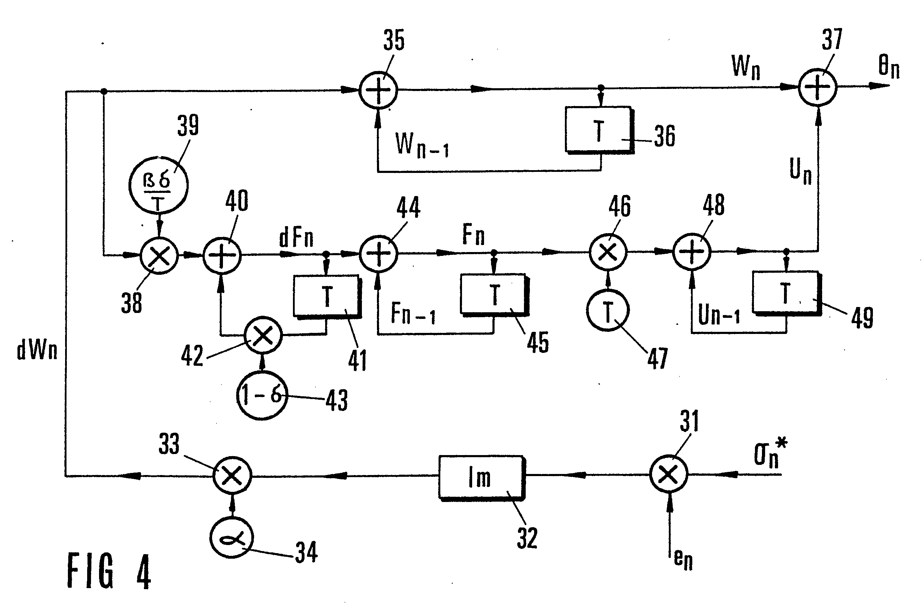

En se référant à la figure 4, ce premier système de réactualisation se compose d'un premier circuit 38 de multiplication du terme $dw_n$ par une constante $\frac{\beta \delta}{T}$ convenablement choisie extraite d'une mémoire 39. Cette grandeur $\frac{\beta \delta}{T} dw_n$ est appliquée, en sortie du circuit 38, à l'entrée d'un circuit d'addition 40. Ce circuit 40 d'addition fournit en sortie une grandeur $dF_n$. L'autre entrée de ce circuit d'addition 40 reçoit la grandeur $dF_{n-1}$ de l'instant $(n-1)T$ d'échantillonnage précédent, contenue dans un registre 41 retardant du temps T d'échantillonnage, ladite grandeur $dF_{n-1}$ étant pondérée par un coefficient $(1 - \delta)$ choisi de façon appropriée. Un circuit 42 de multiplication effectue cette pondération de $dF_{n-1}$, la constante $1 - \delta$ étant extraite d'une mémoire 43.

Le terme $dF_n$ est ensuite appliqué à l'entrée d'un circuit 44 d'addition d'une autre boucle effectuant un filtrage s'écrivant:

$$F_n = F_{n-1} + dF_n$$

La sortie du circuit 44 fournit en effet $F_n$ tandis que l'autre entrée du circuit 44 reçoit le terme $F_{n-1}$ contenu dans le registre 45 à décalage retardant du temps T d'échantillonnage.

Le terme $F_n$ obtenu à la sortie du circuit 44 est appliqué à l'entrée d'un circuit 46 de multiplication qui le multiplie par la grandeur T égale à la période d'échantillonnage extraite d'une mémoire 47. La sortie du circuit 46 de multiplication est reliée à l'entrée d'un circuit d'addition 48 qui fournit en sortie les fluctuations lentes $u_n$ de la phase. L'autre entrée du circuit 48 d'addition reçoit le terme $u_{n-1}$ mis en mémoire dans un registre 49 à décalage retardant d'un temps T d'échantillonnage. Cette nouvelle boucle réalise ainsi un autre filtrage s'écrivant:

$$u_n = u_{n-1} + T \cdot F_n$$

La composante $u_n$ fournie par le circuit d'addition 48 est appliquée à l'entrée d'un circuit 37 d'addition où elle est additionnée avec l'autre composante $w_n$ correspondant aux fluctuations rapides. Le circuit 37 d'addition fournit ainsi en sortie la phase $\theta_n$ estimée pour l'échantillon n.

La composante $w_n$, présente sur l'autre entrée du circuit d'addition 37 est obtenue également à partir de l'accroissement $dw_n$ mais au moyen d'un simple filtrage. Cette grandeur $dw_n$ est appliquée à l'entrée d'un circuit d'addition 35, qui effectue la somme de cette grandeur $dw_n$ avec la valeur $w_{n-1}$ fournie à l'instant d'échantillonnage précédent et conservée au moyen du registre 36 à décalage retardant du temps T.

Le phénomène rapide $w_n$ est ainsi réactualisé selon l'algorithme du gradient:

$$w_n = w_{n-1} + dw_n, \text{ sachant que } dw_n = \alpha \, \text{Im} \, (e_n \sigma_n{}^*)$$

Ainsi on réactualise selon l'invention le phénomène lent au moyen d'une boucle de correction de phase du troisième ordre tandis que le phénomène rapide est quant à lui réactualisé au moyen d'une boucle de correction de phase du premier ordre.

Le choix des constantes $\alpha$, $\beta$, $\delta$ résulte d'un compromis entre la rapidité d'acquisition de l'estimation de la dérive de fréquence et de la dégradation acceptée en l'absence de dérive de fréquence sur l'écho. Toutefois on choisit usuellment $\alpha$ supérieur à $\beta$.

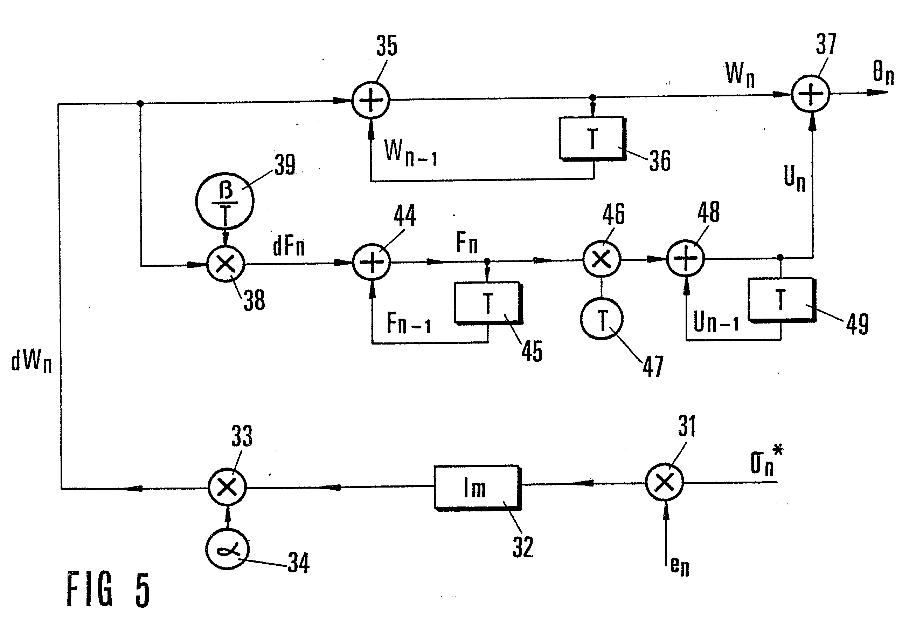

La figure 5 représente une réalisation préférée de l'invention pour laquelle $\delta = 1$. Ainsi la boucle de variation lente de la phase se simplifie et les algorithmes s'écrivent:

$$\Theta_n = u_n + w_n$$

$$w_n = w_{n-1} + dw_n$$

$$dw_n = \alpha \, \text{Im} \, (\sigma_n^* \, e_n) \qquad\qquad [8]$$

$$u_n = u_{n-1} + T \cdot F_n$$

$$F_n = F_{n-1} + \frac{\beta}{T} \, dw_n$$

où $u_n$ représente la correction de phase, ce qui revient à supprimer le filtrage du terme $dF_n$. En se référant à la figure 5, le circuit 44 d'addition reçoit à son entrée directement le terme $\frac{\beta}{T} dw_n$ qu'il additionne avec $F_{n-1}$ fourni par le circuit 45 de retard T pour fournir en sortie le terme $F_n$ à l'entrée du circuit de multiplication 46. Ainsi seule la boucle formée du circuit de retard 41 et du circuit de multiplication 42 est supprimée. Le système de réactualisation de la variation lente de phase passe du troisième au second ordre.

Des simulations de la réalisation de la figure 5 ont permis d'obtenir des résultats de réactualisation de phase, pour annuleur d'écho, très satisfaisants. Dans le système de réalisation préféré de la figure 5, les valeurs de $\alpha$ et $\beta$, en régime permanent, varient de $10^{-3}$ à $10^{-2}$ pour $\alpha$ et $10^{-4}$ à $10^{-3}$ pour $\beta$.

Il est simplement nécessaire que le coefficient $\beta$ soit inférieur à $\alpha$ pour avoir une intégration et une précision suffisante sur l'estimation de la dérive de fréquence de l'écho. Par contre si $\beta$ est trop petit, le temps nécessaire pour obtenir une bonne estimation de la dérive de fréquence sera trop grand. Pour les très faibles valeurs de $\beta$, l'estimation de la dérive n'étant pas obtenue aussi rapidement, la qualité de la transmission bidirectionnelle simultanée est dégradée.

Le présent système de réactualisation de la phase $\Theta_n$ selon l'invention s'est essentiellement intéressé à un accroissement $dw_n$ formé à partir du signal $e_n$ de données après suppression de l'écho dans le domaine complexe. Toutefois le système de réactualisation de la phase selon l'invention est également applicable en ne reconstituant que la partie réelle de $e_n$.

L'accroissement $dw_n$ s'écrit alors:

$$dw_n = \alpha \, e_n \, \text{Im} \, (\sigma_n^*)$$

et les figures 4, 5 et équations [7] restent inchangées.

Le présent système de réactualisation de la phase $\Theta_n$ selon l'invention s'applique aussi bien à un signal $A_n$ en bande de base tel que représenté sur la figure 1 qu'à un signal $A_n$ en bande passante, auquel cas la modulation intervient, dans l'annuleur un peu différemment. En effet on sait que lorsque l'annuleur 5 fonctionne en bande de base comme représenté sur la figure 1 les coefficients $C_n$ sont formés par un système 51 de réactualisation directement à partir du signal $A_n$ complexe de données. La modulation par une porteuse $f_c$ déphasée d'une phase $\Theta_n$ fournie par le système de réactualisation de phase selon l'invention intervient donc à la sortie du système de réactualisation des coefficients.

Toutefois le système de compensation de phase selon l'invention s'appliquerait également à un annuleur d'écho fonctionnant en bande passante. Le système de réactualisation des coefficients $C_n$ reçoit alors le signal de données $A_n$ déjà modulé par la porteuse $f_c$ et le déphasage de $\Theta_n$ fourni par le système de compensation de phase selon l'invention n'est effectué qu'à la sortie du système de réactualisation des coefficients.

## Revendications

1. Dispositif de compensation de phase de l'écho pour la transmission de données utilisant un annuleur d'écho consistant à actualiser la phase propre $\Theta_n$ de l'écho, à chaque instant nT d'échantillonnage, à partir d'une grandeur $dw_n$, ladite grandeur $dw_n$ représentant la partie imaginaire du produit de la correction $\sigma_n^*$ d'écho complexe conjuguée par le signal $e_n$ de données obtenu à la sortie de l'annuleur d'écho, après suppression dudit écho, ledit produit étant multiplié par un coefficient $\alpha$ de proportionnalité, système caractérisé par le fait qu'il comporte des moyens (37) pour additionner, à chaque instant d'échantillonnage, la variation $u_n$ lente de phase avec la variation $w_n$ rapide de phase, lesdits moyens d'addition fournissant en sortie la phase $\Theta_n$ propre de l'écho, ladite variation lente $u_n$ étant obtenue à partir de l'accroissement $dw_n$ par des premiers moyens, ladite variation $w_n$ rapide étant obtenue à partir de l'accroissement $dw_n$ par des seconds moyens.

2. Dispositif de compensation de phase selon la revendication 1, caractérisé par le fait que lesdits premiers moyens fournissant $u_n$ en sortie comportent des moyens (48) pour additionner les fluctuations $u_{n-1}$ de l'instant d'échantillonnage précédent avec la grandeur $T \cdot F_n$, T étant égal à la période d'échantillonnage, ladite grandeur $F_n$ étant obtenue par des moyens (44) d'addition de la grandeur $F_{n-1}$

de l'instant d'échantillonnage précédent avec une grandeur dF$_n$, ladite grandeur dF$_n$ étant obtenue par des moyens (40) d'addition dudit accroissement dw$_n$, pondéré par une constante $\frac{\beta\,\delta}{T}$ positive, avec la grandeur dF$_{n-1}$ de l'instant d'échantillonnage précédent, ladite grandeur dF$_{n-1}$ étant également pondérée par une autre constante $(1-\delta)$ positive réelle.

3. Dispositif de compensation de phase selon la revendication 2, caractérisé par le fait que $\delta$ égale 1.

4. Dispositif de compensation de phase selon la revendication 1, caractérisé par le fait que lesdits seconds moyens fournissant les fluctuations rapides w$_n$ comportent des moyens (35) pour additionner ledit accroissement dw$_n$ avec la grandeur w$_{n-1}$ de l'instant d'échantillonnage précédent.

5. Dispositif de compensation de phase selon l'une des revendications 1 à 4, caractérisé par le fait que le signal e$_n$ de données obtenu à la sortie de l'annuleur d'écho est complexe.

6. Dispositif de compensation de phase selon l'une des revendications 1 à 4, caractérisé par le fait que le signal e$_n$ de données obtenu à la sortie de l'annuleur d'écho est réel.

7. Annuleur d'écho comportant un dispositif de compensation de phase selon l'une des revendications 1 à 6, caractérisé par le fait qu'il fonctionne en bande de base en ce sens que les coefficients sont modulés par une porteuse f$_c$ déphasée de ladite phase $\theta_n$.

8. Annuleur d'écho comportant un dispositif de compensation de phase selon l'une des revendications 1 à 6, caractérisé par le fait qu'il fonctionne en bande passante en ce sens que les coefficients sont formés à partir du signal entrant déjà modulé par la porteuse f$_c$ et que ledit déphasage $\theta_n$ n'est appliqué qu'à la sortie du système de réactualisation des coefficients.

**Patentansprüche**

1. Vorrichtung zur Phasenkompensation des Echos für die Datenübertragung unter Verwendung eines Echounterdrückers, der darauf beruht, daß er die Echoeigenphase $\theta_n$ zu jedem Moment nT der Abtastung ausgehend von einer Größe dw$_n$ aktualisiert, die den Imaginäranteil des Produktes der konjugierten komplexen Korrektur $\sigma_n{}^*$ des Echos mit dem nach der Echounterdrückung am Ausgang des Echounterdrückers erhaltenen Datensignal e$_n$ repräsentiert, wobei dieses Produkt mit einem Proportionalitätskoeffizienten $\alpha$ multipliziert wird, dadurch gekennzeichnet, daß sie, um zu jedem Moment der Abtastung die langsame Phasenveränderung u$_n$ mit der schnellen Phasenveränderung w$_n$ zu addieren, eine Schaltung (37) enthält, die ausgangsseitig die Echoeigenphase $\theta_n$ liefert, wobei die langsame Veränderung u$_n$ ausgehend von dem Anwachsen dw$_n$ durch erste Glieder und die schnelle Veränderung w$_n$ ausgehend von dem Anwachsen dw$_n$ durch zweite Glieder erhalten werden.

2. Vorrichtung zur Phasenkompensation nach Anspruch 1, dadurch gekennzeichnet, daß die ersten, ausgangsseitig den Wert u$_n$ liefernden Gliedern eine Additionsschaltung (48) zum Addieren der Schwankungen u$_{n-1}$ des vorangegangenen Abtastmomentes mit der Größe T · F$_n$ enthalten, wobei T gleich der Abtastperiode ist, während F$_n$ durch eine Schaltung (44) zum Addieren der Größe F$_{n-1}$ des vorangegangenen Abtastmomentes mit der Größe dF$_n$ erhalten wird, und daß die Größe dF$_n$ durch eine Schaltung (40) zur Addition des Anwachsens dw$_n$, berichtigt durch eine positive Konstante $\frac{\beta\,\delta}{T}$, mit der Größe dF$_{n-1}$ des vorangegangenen Abtastmomentes erhalten wird, wobei auch die Größe dF$_{n-1}$ durch eine weitere reale positive Konstante $(1-\delta)$ berichtigt ist.

3. Vorrichtung zur Phasenkompensation nach Anspruch 2, dadurch gekennzeichnet, daß $\delta$ gleich 1 ist.

4. Vorrichtung zur Phasenkompensation nach Anspruch 1, dadurch gekennzeichnet, daß die zweiten Glieder, welche die schnellen Schwankungen w$_n$ liefern, eine Schaltung (35) zum Addieren des Anwachsens dw$_n$ mit der Größe w$_{n-1}$ des vorangegangenen Abtastmomentes enthalten.

5. Vorrichtung zur Phasenkompensation nach einem der Ansprüche 1 bis 4, dadurch gekennzeichnet, daß das am Ausgang des Echounterdrückers erhaltenen Datensignal komplex ist.

6. Vorrichtung zur Phasenkompensation nach einem der Ansprüche 1 bis 4, dadurch gekennzeichnet, daß das am Ausgang des Echounterdrückers erhaltene Datensignal real ist.

7. Echounterdrücker mit einer Vorrichtung zur Phasenkompensation nach einem der Ansprüche 1 bis 6, dadurch gekennzeichnet, daß er im Basisband in dem Sinne funktioniert, daß dei Koeffizienten mit einer von der genannten Phase $\theta_n$ phasenverschobenen Trägerfrequenz f$_c$ moduliert werden.

8. Echounterdrücker mit einer Vorrichtung zur Phasenkompensation nach einem der Ansprüche 1 bis 6, dadurch gekennzeichnet, daß er im Durchlaßband in dem Sinne funktioniert, daß die Koeffizienten ausgehend von dem durch die Trägerfrequenz f$_c$ schon modulierten Eingangssignal gebildet werden und daß die Phasenverschiebung $\theta_n$ nur am Ausgang des Systems zur Reaktualisierung der Koeffizienten angelegt wird.

## Claims

1. Device for compensating echo phase for data transmission employing an echo cancellation device consisting in actualizing the natural phase $\Theta_n$ of the echo, at each sampling instant nT, From a magnitude $dw_n$, said magnitude $dw_n$ representing the imaginary part of the product of the conjugated complex echo correction $\sigma_n{}^*$ by the data signal $e_n$ obtained at the output of the echo cancellation device, after elimination of said echo, said product being multiplied by a coeffizient $\alpha$ of proportionalty, said system being characterized in that it comprises means (37) for adding, at each sampling instant, the slow phase variation $u_n$ with the rapid phase variation $w_n$, said addition means furnishing at the output the naturel phase $\Theta_n$ of the echo, said slow variation $u_n$ being obtained from the increase $dw_n$ by first means, said rapid variation $w_n$ being obtained from the increase $dw_n$ by second means.

2. The phase compensation device of Claim 1, characterized in that said first means furnishing $u_n$ at the output comprise means (48) for adding the fluctuations $u_{n-1}$ of the preceding sampling instant with the magnitude $T \cdot F_n$, T being equal to the sampling period, said magnitude $F_n$ being obtained by means (44) for adding the magnitude $F_{n-1}$ of the preceding sampling instant with a magnitude $dF_n$, said magnitude $dF_n$ being obtained by means (40) for adding said increase $dw_n$, weighted by a positive constant $\frac{\beta \delta}{T}$, with the magnitude $dF_{n-1}$ of the preceding sampling instant, said magnitude $dF_{n-1}$ also being weighted by another real positive constant $(1 - \delta)$.

3. The phase compensation device of Claims 2, characterized in that $\delta$ is equal to 1.

4. The phase compensation device of Claim 1, characterized in that said second means furnishing the rapid fluctuations $w_n$ comprise means (35) for adding said increase $dw_n$ with the magnitude $w_{n-1}$ of the preceding sampling instant.

5. The phase compensation device of one of Claims 1 to 4, characterized in that the data signale $e_n$ obtained at the output of the echo cancellation device is complex.

6. The phase compensation device of one of Claims 1 to 4, characterized in that the data signal $e_n$ obtained at the output of the echo cancellation device is real.

7. An echo cancellation device comprising a phase compensation device according to one of Claims 1 to 6, characterized in that it operates in base band insofar as the coefficients are modulated by a carrier frequency $f_c$ phase shifted by said phase $\Theta_n$.

8. An echo cancellation device comprising a phase compensation device according to one of Claims 1 to 6, characterized in that it operates in pass band insofar as the coefficients are formed from the incoming signal already modulated by the carrier frequency $f_c$ and said phase shift $\Theta_n$ is applied only at the output of the coefficient reactualization system.

$A_n$

1

2

L

5

$e^{j(2\pi f_c nT + \Theta n)}$

51 $C_n$

$e^{j(2\pi f_c nT + \Theta n)}$

$\Theta_n$ 52

$\sigma_n$

6

7

$h_n$

$e_n$

$e_n$

4

$\hat{b}_n$

**FIG 1**

FIG 2

FIG 3

FIG 4

FIG 5